# EUROPÄISCHE PATENTSCHRIFT

(11) **EP 1 266 945 B1**
(45) Veröffentlichungstag und Bekanntmachung des Hinweises auf die Patenterteilung: **15.06.2005**
(21) Anmeldenummer: 02012362.6
(22) Anmeldetag: 06.06.2002
(51) Int. Cl.: C09D 163/00, C08G 59/18

(54) **Wässrige Bindemittel**
Aqueous blinders
Liants aqueux

(30) Priorität: 15.06.2001 AT 9322001
(43) Veröffentlichungstag der Anmeldung: 18.12.2002
(73) Patentinhaber: Surface Specialties Austria GmbH, 8402 Werndorf (AT)
(72) Erfinder: Paar, Willibald, Dr., 8010 Graz (AT); Friedl, Maximilian, Dr., 8101 Graz (AT)
(74) Vertreter: Deckers, Hellmuth, Dr.

(56) Entgegenhaltungen:
- US-A- 5 554 700
- US-A- 5 670 441
- US-A- 5 936 013
- US-A- 6 156 823

## Beschreibung

Die Erfindung betrifft wäßrige Bindemittel.

Lufttrocknende Harze oder Bindemittel sind vor allem auf dem Gebiet der Alkydharze bekannt; wasserverdünnbare Alkydharze werden durch Vermischen von (nichtmodifizierten) Alkydharzen mit Emulgatoren oder durch Einbau von einer ausreichenden Anzahl von nach der Kondensationsreaktion verbleibenden Säuregruppen und deren zumindest teilweiserNeutralisation oder die Cokondensation mit hydrophilen Polyoxyalkylen-Polyolen wie Polyäthylenglykol gewonnen.

Beispielsweise sind hydroxyfunktionelle Emulgatoren für Alkydharze auf Basis von Polyurethan-Polyharnstoffen aus der EP-A 0 741 156 bekannt. Andere fremdemulgierte wäßrige Alkydharz-Zusammensetzungen sind in der EP-A 0 593 487 beschrieben. Alkydharze mit chemisch eingebautem Emulgator (selbstemulgierend) sind aus der EP-A 0 312 733 bekannt.

Die Wasserverträglichkeit wird in allen Fällen erreicht durch Verwendung von nichtionischen oder anionischen Emulgatoren, in chemisch eingebauter oder zugesetzter Form.

Es ist auch bekannt, Polyurethanharze durch Einbau von ungesättigten Fettsäuren (EP-A 0 444 454) so zu modifizieren, daß damit hergestellte Lacke lufttrocknend sind.

Epoxidgruppen-haltige Harze, die durch Modifikation mit Fettsäuren zu lufttrocknenden Bindemitteln führen, werden beschrieben in den EP-A 0 355 761 (Ester von Fettsäuren mit Epoxidharzen), 0 316 732, 0 370 299, (Acrylatharze mit Epoxidgruppen) und 0 267 562 (mit olefinisch ungesättigten Monomeren in wäßrigem Medium gepfropfte Alkyd-, Urethan-Alkyd- oder Epoxid-Ester-Harze).

Wäßrige Zubereitungen von neutralisierten Reaktionsprodukten aus Epoxidharz-Amin-Addukten und Fettsäuren sind aus der EP-A 0 070 704 bekannt. Hier werden aus Aminen und Epoxidharzen auf Basis von mehrwertigen Phenolen Addukte mit einer molaren Masse von 1000 bis 3000 g/mol hergestellt, die anschließend mit ungesättigten Fettsäuren zu einem Produkt umgesetzt werden, in dem der Massenanteil dieser Fettsäuren 25 bis 50 % beträgt. Die Menge der Fettsäuren ist dabei so zu wählen, daß alle aktiven Amin-Wasserstoffatome verbraucht werden.

Aus der AT-B 390 261 sind Emulsionen von Epoxidharzestern bekannt, die als Bindemittel für lufttrocknende Lacke eingesetzt werden können. Die Harze werden durch Umsetzung von teilweise mit Fettsäuren veresterten Epoxidharzen und Copolymerisaten von ungesättigten Fettsäuren und (Meth)Acrylsäure sowie weiteren copolymerisierbaren Monomeren hergestellt und zur Erzielung der Wasserverdünnbarkeit mit Alkalien zumindest teilweise neutralisiert. Diesen Harzen können auch aminofunktionelle Epoxidharzester zugemischt werden.

Es wurde nun gefunden, daß Umsetzungsprodukte von Epoxidharzen und fettsäuremodifizierten Epoxid-Amin-Addukten mit einem Zusatz von Wismutverbindungen sich als Bindemittel für lufttrocknende und physikalisch trocknende Lacke einsetzen lassen, die ausgezeichneten Korrosionsschutz auf metallischen Substraten bewirken.

Gegenstand der Erfindung sind daher wäßrige Bindemittel für lufttrocknende und physikalisch trocknende Beschichtungsmittel, enthaltend Wismutverbindungen **D** und Umsetzungsprodukte **A'ABC** aus Epoxidharzen **A'** mit mindestens zwei Epoxidgruppen pro Molekül und Reaktionsprodukten **ABC** von Epoxidharzen **A**, Fettsäuren **B** und Aminen **C**, wobei die zahlenmittlere molare Masse Mₙ der Umsetzungsprodukte **A'ABC** mindestens 5000 g/mol beträgt.

Als "wäßrige" Bindemittel werden wasserlösliche Bindemittel und solche Bindemittel bezeichnet, die in Wasser stabile Dispersionen bilden.

Insbesondere beträgt die aus der Stöchiometrie berechnete (zahlenmittlere) molare Masse Mₙ dieser Umsetzungsprodukte **A'ABC** vorzugsweise mindestens 10 000 g/mol, bevorzugt mindestens 15 000 g/mol, und besonders bevorzugt mindestens 20 000 g/mol, und ihre (gemessene) Säurezahl nicht mehr als 5 mg/g. Nach zumindest teilweiser Neutralisation der Aminogruppen sind die Umsetzungsprodukte **A'ABC** in Wasser zu stabilen Dispersionen dispergierbar, die auch nach 4-wöchiger Lagerung bei Raumtemperatur (20 °C) keinen Bodensatz bilden.

Die Epoxidharze **A** und **A'** werden unabhängig voneinander aus Di- oder Polyepoxidverbindungen ausgewählt, die in bekannter Weise durch Reaktion von Epichlorhydrin mit aromatischen oder (cyclo)aliphatischen Verbindungen mit zwei oder mehr Hydroxylgruppen pro Molekül erhältlich sind (Taffy-Prozeß), oder durch Umsetzung von Diepoxiden oder Polyepoxiden mit den genannten aromatischen oder (cyclo)aliphatischen Verbindungen mit zwei oder mehr Hydroxylgruppen pro Molekül (Advancement-Reaktion) gewonnen werden können. Bevorzugt werden Epoxidharze auf Basis von aromatischen Dihydroxyverbindungen, wie Bisphenol A, Bisphenol F, Dihydroxydiphenylsulfon, Hydrochinon, Resorcin, 1,4-Bis[2-(4-hydroxyphenyl)-2-propyl]benzol, oder aliphatischen Dihydroxyverbindungen wie Hexandiol-1,6, Butandiol-1,4, Cyclohexandimethanol, oder oligo- und poly-Propylenglykol mit mittleren Polymerisationsgraden zwischen 3 und 40. Der spezifische Epoxidgruppengehalt der Epoxidharze beträgt unabhängig voneinander für die Epoxidharze **A** und **A'** jeweils bevorzugt 0,4 bis 7 mol/kg, insbesondere 0,6 bis 6 mol/kg, wobei der Epoxidgruppengehalt von **A'** bevorzugt größer ist als der von **A.** In einer bevorzugten Ausführungsform werden für **A** und **A'** jeweils Diepoxidverbindungen eingesetzt, wobei die spezifischen Epoxidgruppengehalte bei **A** 0,5 bis 4 mol/kg, und bei **A'** 2 bis 5,9 mol/kg betragen.

Besonders bevorzugt werden Epoxidharze auf Basis von Bisphenol A und Bisphenol F sowie deren Mischungen.

Die eingesetzten Fettsäuren **B** weisen mindestens eine olefinische Doppelbindung auf, und haben 6 bis 30, bevorzugt 8 bis 26, und insbesondere 16 bis 22 Kohlenstoffatome. Bevorzugt sind Palmoleinsäure, Ölsäure und Erucasäure; Linolsäure, Linolensäure und Elaostearinsäure, Arachidonsäure und Clupanodonsäure sowie die aus den natürlich vorkommenden Ölen als Gemische erhältlichen Fettsäuren wie Leinölfettsäure, Sojaölfettsäure, Conjuvandol-Fettsäure, Tallölfettsäure, Baumwollsaatölfettsäure, Rapsölfettsäure, und die aus dehydratisiertem Ricinusöl gewonnenen Fettsäuregemische.

Die Amine **C** sind bevorzugt aliphatische, lineare, cyclische oder verzweigte Amine, die mindestens eine primäre oder sekundäre Aminogruppe enthalten. Sie weisen bevorzugt 2 bis 12 Kohlenstoffatome auf und können auch tertiäre Aminogruppen und/oder Hydroxylgruppen als funktionelle Gruppen enthalten. Besonders geeignet sind primäre Monoamine mit 6 bis 12 Kohlenstoffatomen wie Hexylamin, Cyclohexylamin, 2-Äthylhexylamin und Stearylamin, primäre Diamine wie Äthylendiamin, 1,4-Diaminobutan und 1,6-Diaminohexan, primär-tertiäre Diamine wie Dimethylaminopropylamin, Diäthylaminopropylamin, diprimär-sekundäre Amine wie Diäthylentriamin, 1,9-Diamino-5-azanonan, 1,13-Diamino-7-azatridecan, Triäthylentetramin und Tetraäthylenpentamin sowie die als ®Polymin im Handel erhältlichen Gemische oligomerer Diaminopolyäthylenimine, ferner sekundäre Amine und Diamine wie Piperidin, Piperazin, Di-n-butylamin, Morpholin, und hydroxyfunktionelle Amine wie Äthanolamin, Diäthanolamin und Diisopropanolamin. Es können auch Gemische der genannten Amine eingesetzt werden.

Es ist möglich, die Zwischenprodukte **ABC** durch sequentielle Reaktion (Variante I) herzustellen, wobei zunächst die Epoxidverbindungen **A** mit den Aminen **C** zu einem Produkt **AC** umgesetzt werden und diese Addukte im zweiten Schritt mit den Fettsäuren **B** zu dem Zwischenprodukt **ABC** reagiert werden. Es ist jedoch auch möglich (Variante II), zunächst die Epoxidverbindungen **A** mit den Fettsäuren **B** zu einem Produkt **AB** umzusetzen, und die verbliebene Epoxidgruppen in **AB** dann mit den Aminen **C** zu reagieren. Es ist ebenfalls möglich (Variante III), die Reaktion zugleich vorzunehmen und so in einem Schritt zu den Zwischenprodukten ABC zu gelangen. Die Mengen der Edukte **A**, **B** und **C** werden so gewählt, daß im wesentlichen alle Epoxidgruppen, d. i. mindestens 90 %, bevorzugt mindestens 95 %, und insbesondere mindestens 98 % der in **A** ursprünglich vorhandenen Epoxidgruppen umgesetzt werden. Ebenso ist die Reaktion vorzugsweise so zu führen, daß das Zwischenprodukt **ABC** keine reaktiven Aminwasserstoffatome mehr aufweist, maximal jedoch darf der Gehalt an Aminwasserstoffatomen 10 mmol/kg betragen.

Es ist auch möglich (wie weiter unten beschrieben), nichttrocknende Fettsäure wie Palmitinsäure oder Stearinsäure anstelle der ungesättigten Fettsäuren **B** einzusetzen, wodurch selbstverständlich lediglich physikalisch trocknende Bindemittel erhalten werden. Der Einfachheit halber werden im folgenden jedoch auch Umsetzungsprodukte, die nichttrocknende (gesättigte) Fettsäuren enthalten, als "**ABC**" bezeichnet.

Eine weitere Variante der vorliegenden Erfindung besteht darin, beim Einsatz von Aminen **C**, die mehr als zwei Aminwasserstoffatome aufweisen, einen Teil dieser Aminwasserstoffatome durch Reaktion mit einem Monoepoxid **A"** zu verbrauchen. So wird aus einer primären Aminogruppe mit zwei aktiven Aminwasserstoffatomen eine sekundäre β-Hydroxyamin-Gruppe, oder aus einer sekundären Aminogruppe eine tertiäre β-Hydroxyamingruppe.

Als Monoepoxid **A"** eignen sich beliebige aliphatische oder aromatische Monoepoxide oder deren Gemische, insbesondere Glycidyläther von einwertigen Alkoholen oder Phenolen wie Butylglycidyläther, 2-Äthylhexylglycidyläther, Phenylglycidyläther, sowie Glycidylester einwertiger Säuren, bevorzugt aliphatischer oder aromatischer Carbonsäuren wie Benzoesäureglycidylester, Glycidylacetat, Glycidylstearat sowie die Glycidylester von in α-Stellung verzweigten aliphatischen Carbonsäuren wie Glycidyl-2-äthylhexanoat, Glycidyl-2,2-dimethylpropionat, Glycidyl-2,2-dimethyloctanoat, Glycidyl-2-methylnonanoat, insbesondere technische Gemische solcher verzweigten aliphatischen Ester, die als ®Cardura E5 (Glycidylester einer Mischung von in α-Stellung verzweigten Pentansäuren) bzw. E10 (Glycidylester einer Mischung von in α-Stellung verzweigten Decansäuren) oder ®Glydexx im Handel erhältlich sind.

Gemäß dieser Variante werden die Amine **C** ganz oder teilweise vor der Umsetzung mit **A** oder mit **AB** durch die Reaktion mit den Monoepoxiden **A"** in ihrer Funktionalität verringert. Diese modifizierten Amine **C'** werden anschließend alleine oder in Mischung mit den nichtmodifizierten Aminen **C** in der weiteren Reaktion mit **A** oder mit **AB** (stufenweise Reaktion) oder mit **A** und **B** (gemeinsame Reaktion) eingesetzt.

Es ist im Rahmen der Erfindung auch möglich, die Epoxidharze **A** vor, während oder nach der Umsetzung mit den Reaktionspartnern **B** und **C** mit weiteren Verbindungen **E** umzusetzen, die über mindestens ein gegenüber Epoxidgruppen reaktives Wasserstoffatom in einer Hydroxylgruppe oder Säuregruppe verfügen, also Alkoholen, Phenolen und Säuren, insbesondere Verbindungen mit aktivierten Hydroxylgruppen und Säuregruppen, die bevorzugt ausgewählt sind aus aliphatischen Di- und Polyolen wie Glykol, Propandiol, Neopentylglykol, Glycerin, Trimethylolpropan, Pentaerythrit, Ditrimethylolpropan und Dipentaerythrit, (substituierten) Phenolen wie Phenol selbst, den isomeren Kresolen und Xylenolen sowie mehrwertigen und/oder mehrkernigen Phenolen wie Resorcin, Dihydroxydiphenyl, Dihydroxydiphenylsulfon, Bisphenol A, α- und β-Naphthol und 2,3- sowie 2,6-Dihydroxynaphthalin, ein- und mehrbasigen Carbonsäuren wie gesättigten aliphatischen linearen oder verzweigten Carbonsäuren mit 2 bis 40 Kohlenstoffatomen wie iso-Octansäure, Stearinsäure, den dimeren Fettsäuren, aromatischen Carbonsäuren wie Benzoesäure, Iso- und Terephthalsäure, Sulfonsäuren wie Benzolsulfonsäure und Sulfoisophthalsäure, Phosphorsäure, Alkyl- und Arylphosphonsäuren wie Methan- und Benzolphosphonsäure.

Zur Herstellung der erfindungsgemäßen Umsetzungsprodukte **A'ABC** werden die Komponenten bevorzugt in den folgenden Stoffmengenanteilen umgesetzt:
auf 1 mol der Epoxidverbindung **A** werden 0,1 bis 1 mol und besonders bevorzugt 0,25 bis 0,8 mol der Fettsäuren **B** und 0,5 bis 1,9 mol, bevorzugt 0,6 bis 1,75 mol, und besonders bevorzugt 0,65 bis 1,5 mol der Amine **C** in der ersten Stufe eingesetzt, und darauf in der zweiten Stufe 0,2 bis 1,0 mol, bevorzugt 0,25 bis 0,9, besonders bevorzugt 0,3 bis 0,8 mol der Epoxidverbindung **A'** mit dem Addukt der ersten Stufe reagiert.

Werden dabei Verbindungen **E** eingesetzt, so ist deren Stoffmengenanteil je 1 mol der Epoxidverbindung **A** bzw. **A'** 0,02 bis 0,3 mol, bevorzugt 0,05 bis 0,25 mol, und besonders bevorzugt 0,1 bis 0,2 mol. Die Verbindungen **E** können vor der Reaktion mit **B** und/oder **C** zur Modifizierung der Epoxidverbindungen eingesetzt werden; es ist auch möglich, sie gemeinsam mit den Komponenten **B** und/oder **C** einzusetzen.

Werden Monoepoxid-Verbindungen **A"** zur Modifizierung der Amine **C** eingesetzt, so ist deren Stoffmenge so zu wählen, daß die Amine **C**' im Mittel noch über mindestens ein reaktives Aminwasserstoffatom je Molekül verfügen.

Werden die Epoxidverbindungen **A** bzw. **A'** oder die Amine **C** ganz oder teilweise durch diese modifizierten Verbindungen gemäß den beiden vorangehenden Abschnitten ersetzt, so ist in diese Stoffmengen-Bedingungen anstelle von **A, A'** und **C** jeweils das Gemisch bzw. die modifizierte Verbindung einzusetzen.

Die Wismutverbindungen **D** sind ausgewählt aus organischen Wismutsalzen und Wismut-Chelaten. Unter Wismut-Chelaten werden hier Wismutverbindungen mit organischen Liganden verstanden, die pro Molekül mindestens zwei Atome enthalten, die freie Elektronenpaare aufweisen, und damit mindestens zwei benachbarte Koordinationsstellen des Wismut-Zentralatoms unter bevorzugter Ausbildung eines fünf- oder sechsgliedrigen Ringes besetzen. Chelatbildner für Wismut sind insbesondere organische Hydroxysäuren wie Glykolsäure, Milchsäure, Citronensäure, Weinsäure, Salicylsäure, Dimethylolessigsäure und Dimethylolpropionsäure, Diphenole wie Brenzkatechin und Tetrabrombrenzcatechin, stickstoffhaltige aromatische und aliphatische Hydroxyverbindungen wie 8-Hydroxychinolin, α- und β- Aminosäuren wie Alanin, β-Alanin, Serin und Glycin, Hydroxymercaptane wie 2,3-Dimercaptopropanol, Mercaptosäuren wie Thioglykolsäure und tertiäre Aminosäuren wie Nitrilotriessigsäure, Äthylendiamintetraessigsäure und Diäthylentriaminpentaessigsäure. Organische Wismutsalze sind insbesondere abgeleitet von starken organischen Säuren wie Methansulfonsäure, Trichloressigsäure, Trifluoressigsäure, und mindestens zweiwertigen (auch chelatbildenden) Carbonsäuren wie Oxalsäure, Malonsäure, Bernsteinsäure und Tricarballylsäure. Bevorzugt sind Wismutsalze von Amino- und Hydroxysäuren wie Wismut-lactat, -glycolat, -bishydroxymethylacetat und-bishydroxymethylpropionat. Die Wismutverbindungen **D** werden in solchen Mengen eingesetzt, daß ihr Massenanteil, bezogen auf die Masse des Feststoffanteils, 0,1 bis 20 % ausmacht, wobei der Massenanteil an Wismut selbst 0,01 bis 5 %, bevorzugt 0,02 bis 4 %, beträgt.

Die Herstellung der Umsetzungsprodukte **A'ABC** erfolgt durch Umsetzung der Komponenten **A, B** und **C** vorzugsweise in einem unter den Reaktionsbedingungen inerten Lösungsmittel bei einer Temperatur von 70 bis 150 °C, wobei die Konzentration (Massenanteil) der Komponenten **A**, **B** und **C** (sowie gegebenenfalls **E**) in der Lösung 30 bis 85 %, bevorzugt 50 bis 80 %, beträgt. Als Lösungsmittel werden bevorzugt Ätheralkohole (Alkoxyalkanole mit 3 bis 10 Kohlenstoffatomen) wie Methoxypropanol, Isopropylglykol, Butylglykol und 3-Methoxybutanol-1 eingesetzt. Die Lösung des Addukts **ABC** wird nach Beenden der Reaktion (vollständiger Verbrauch der Epoxidgruppen) durch Zugabe von organischen oder anorganischen Säuren neutralisiert, bis zu einem Neutralisationsgrad (prozentualer Anteil an in die Salzform überführten tertiären Aminogruppen, bezogen auf deren Gesamtmenge) von 20 bis 90 %, bevorzugt 30 bis 85 %, und insbesondere 40 bis 80 %, und die (teilweise) neutralisierte Lösung des Addukts wird mit Wasser auf einen Festkörper-Massenanteil von 20 bis 60%, bevorzugt 25 bis 55 %, und besonders bevorzugt 30 bis 50 %, verdünnt. Dabei kann die organische Lösung in (bevorzugt vorgewärmtes) Wasser eingerührt werden, oder Wasser kann in die organische Lösung eingerührt werden. Es ist auch bevorzugt möglich, einen Teil der zur Neutralisation verwendeten Säure, bevorzugt 20 bis 80 %, in das zur Verdünnung verwendete Wasser zu geben. Die zur Neutralisation verwendeten Säuren sind bevorzugt ausgewählt aus Borsäure, Phosphorsäure, Ameisensäure, Essigsäure, Milchsäure, Citronensäure und Weinsäure. Zu dieser wäßrigen Lösung wird anschließend die Wismutverbindung **D** zugesetzt; die Mischung wird gut homogenisiert. In diese wäßrige Lösung wird bei einer Temperatur von 60 bis 99 °C, bevorzugt 70 bis 97 °C, und besonders bevorzugt 75 bis 95 °C die Epoxidverbindung **A'** langsam zugegeben, und die Umsetzung wird solange durchgeführt, bis alle Epoxidgruppen verbraucht sind. Es ist auch möglich, die Wismutverbindung **D** erst nach der Umsetzung mit dem Epoxid **A'** zuzusetzen.

Anstelle einer Zugabe der zur Neutralisation verwendbaren organischen und anorganischen Säuren kann die Neutralisation auch allein durch Zugabe der (säurehaltigen) Wismutverbindung **D** bewirkt werden.

Die Umsetzungsprodukte **A'ABC** sind geeignet als Bindemittel zur Herstellung von wäßrigen Beschichtungsmitteln, die physikalisch oder an der Luft durch Oxidation trocknen. Die Beschichtungen schützen das Substrat vor korrosiven Einwirkungen durch Säuren, Alkalien, Salzlösungen und Wasser. Daher eignen sich die erfindungsgemäßen Bikatalysierten Umsetzungsprodukte insbesondere zur Formulierung von Korrosionsschutz-Grundierungen zur Anwendung auf Blechen oder anderen Oberflächen von unedlen Metallen (die in der Spannungsreihe vor Wasserstoff stehen), also insbesondere für Bleche aus Eisen, verzinktem Eisen, Stahl, Aluminium und Aluminiumlegierungen. Solche Beschichtungsmittel enthalten auch die üblichen Zusätze wie Entschäumer, Verlaufshilfsmittel, Pigmente, Dispergiermittel, Antiabsetzmittel und Verdicker.

Da die Trocknung erst nach dem Auftrag auf das Substrat (physikalisch oder oxydativ) erfolgen kann, haben die erfindungsgemäßen wäßrigen Bindemittel keine Beschränkung durch eine Topfzeit. In dieser Eigenschaft unterscheiden sie sich vorteilhaft von beispielsweise Zweikomponentensystemen (2K-Systemen), die erst kurz vor der Applikation gemischt werden dürfen. Im Vergleich zu bekannten Einkomponenten-Systemen (heißhärtenden Systemen) auf Epoxidharz-Basis zeichnen sich die erfindungsgemäßen Bindemittel und die damit zubereiteten Lacke durch verbesserte Substrathaftung und verbesserte Haftung der darauf applizierten weiteren Lackschichten aus. Selbst in dünnen Schichten ab ca. 15 µm ergeben sich bereits ausgezeichnete Korrosionsschutzeigenschaften.

### Beispiele

### Beispiel 1 Bindemittel

### 1.1 Fettsäure-modifiziertes Epoxid-Amin-Addukt

3420 g eines Epoxidharzes auf Basis von Bisphenol A mit einem spezifischen Epoxidgruppengehalt von 5,3 mol/kg ("Epoxidäquivalentgewicht" EEW = 190 g/mol) wurden mit 210 g (2 mol) Diäthanolamin, 167 g (1,7 mol) Dimethylaminopropylamin, 407 g (1,8 mol) Bisphenol A und 840 g (3 mol) Tallölfettsäure bei 140 °C bis zum vollständigen Verbrauch der Epoxidgruppen reagiert.

Nach Abkühlen auf 90 °C wurden 50 mmol Essigsäure auf 100 g des Festharzes hinzugefügt und mit voll entsalztem Wasser verdünnt auf einen Festkörper-Massenanteil (Massenanteil an nichtflüchtigen Stoffen) von 42 %.

### 1.2 Katalysatorlösung

938,9 g (7 mol) Dimethylolpropionsäure gelöst in 2154 g Wasser wurden auf 70 °C erwärmt. Unter Rühren wurden 465,96 g Wismutoxid (Bi₂O₃, 1 mol) allmählich zugegeben, wobei mit der weiteren Zugabe jeweils solange gewartet wurde, bis das Oxid in Lösung gegangen war. Nach vollständiger Lösung wurde über Nacht (14 Stunden) weiter gerührt, und anschließend auf Raumtemperatur (20 °C) abgekühlt. Die erhaltene Katalysatorlösung hatte einen Metallgehalt von 11,7 % und eine Säurezahl von 100 mg/g.

### 1.3 Wäßriges Bindemittel

Zu der wäßrigen Lösung aus 1.1 wurden bei 90 °C 950 g der Katalysatorlösung aus 1.2 zugegeben. Nach guter Durchmischung wurden innerhalb von einer Stunde 380 g Bisphenol A-Diglycidyläther zugegeben, und die Mischung wurde unter Rühren bei 90 °C gehalten, bis keine Epoxidgruppen mehr nachweisbar waren. Durch weiteren Zusatz von Wasser wurde auf einen Festkörper-Massenanteil von 35 % verdünnt.

### Beispiel 2 Grundiermittel (Primer)

Mit diesem Bindemittel wurde ein kationischer Primer formuliert, wobei in einem Gemisch von 88 g voll entsalztem Wasser, 22 g eines handelsüblichen Dispergiermittels (®Additol VXW 6208, Solutia Austria GmbH) und 3 g eines handelsüblichen Entschäumers (®Surfynol SE-F, E.I. DuPont de Nemours) unter Zusatz von 6 g eines Thixotropiermittels (®Luwothix HT, Lehmann & Voss) und 3 g eines Acrylatverdickers (®Acrysol RM 8/12 WA, Rohm & Haas) eine Aufschlämmung hergestellt wurde von 62 g eines Eisenoxidpigments (®Bayferrox, Bayer AG), 106 g eines modifizierten Zinkphosphats (®Heucophos ZPO, Heubach), 55 g eines Kaolins (®ASP 600, Engelhardt) und 55 g eines Talkums (®Talkum AT1, Norwegian Talc ). Zu dieser Aufschlämmung wurden 480 g der obigen Bindemittellösung in Wasser, und 3 g eines Kobaltoctoat-Sikkativs (als 3 % ige Lösung in Wasser) sowie weitere 117 g Wasser gegeben. Der erhaltene wäßrige Primer hatte eine Auslaufzeit (4 mm-Becher; DIN-EN-ISO 2431 bzw. DIN 53 211) von ca. 30 s.

### Vergleichsbeispiele (Beispiel 3 und 4)

Als Vergleich wurden ein Primer 3 (Beispiel 3) auf Basis einer wäßrigem Emulsion eines oxydativ trocknenden Epoxidharzesters (®Duroxyn VEF 4380, Solutia Austria GmbH) und ein konventioneller lösungsmittelhaltiger Primer 4 (Beispiel 4) auf Basis eines Harzsäuremodifizierten mittelöligen Alkydharzes (®Vialkyd AM 404, Solutia Austria GmbH) herangezogen. Deren Formulierungen sind der nachstehenden Tabelle 1 zu entnehmen.

**Tabelle 1:**

| Zusammensetzung der Grundierungen (Primer) | | | | | |
|---|---|---|---|---|---|
| Bestandteile | Hersteller | Funktion | Primer 2 (erfindungsgemäß) | Primer 3 (Epoxidharzeszter) | Primer 4 (konventioneller Alkydharz-Primer |
| | | Bindemittel | aus Beispiel 1 480 g | ®Duroxyn VEF 4380 583 g | ®Vialkyd AM 404 350 g |
| Wasser | | Verdünnung | 88 g | | |
| AMP 90 | Angus | Neutralisationsmittel | | 2 g | |
| ®Additol VXW 6208 | Solutia Austria GmbH | Dispergiermittel | 22 g | 6 g | 10 g |
| ®Surfynol SE-F | E.I.DuPont de Nemours | Entschäumer | 3 g | 3 g | |
| ®Bayferrox 140 | Bayer AG | Eisenoxidpigment | 62 g | 88 g | 99 g |
| ®Heucopohos ZPO | Heubach | Zinkphosphat | 106 g | 100 g | 101 g |
| ®ASP 600 | Engelhardt | Kaolin | 55 g | 60 g | 60 g |
| ®Talcum AT1 | Norwegian Talc | Talkum | 55 g | 60 g | 60 g |
| ®Luwothix HT | Lehmann & Voss | Antiabsetzmittel | 6 g | 6 g | 10 g |
| ®Acrysol RM 8/12 WA | Rohm & Haas | Verdicker | 3 g | 10 g | |
| ®Additol XL 280 | Solutia Austria GmbH | Antiabselzmittel | | | 19 g |
| Co-Oktoat 3 %ige wäßr. Lsg. | | Sikkativ | 3 g | 6 g | |
| Wasser | | Verdünnung | 117 g | 76 g | |
| Xylol | | Verdünnung | | | 278 g |
| Lack | | | 1000 g | 1000 g | 1000 g |

Diese Primer (Grundierungen) wurden auf Industrie-Eisenbleche (unbehandelt) mit einer Trockenfilmstärke von ca. 30 µm appliziert durch Aufspritzen (Spritzviskosität gemessen als Auslaufzeit aus einem 4 mm-Becher gemäß DIN EN ISO 2431: ca. 30 s). Nach einer Trocknungszeit von 10 Tagen bei Raumtemperatur wurde ein Korrosionstest gemäß DIN 50021 durchgeführt. Die Ergebnisse sind in der Tabelle 2 zusammengefaßt:

**Tabelle 2:**

| Ergebnisse des Korrosionstests | | | |
|---|---|---|---|
| Korrosionsschutz nach Belastung von | Primer 2 | Primer 3 (Vergleich) | Primer 4 (Vergleich) |
| 72 h | + | + | + |
| 144 h | + | 0 | + |
| 240 h | + | - | + |
| 480 h | 2 | | - |
| 720 h | + | | |

Dabei wurde normgemäß bewertet
als "sehr gut" : +; als "ausreichend" : 0; und als "mangelhaft" : -.

Im Vergleich mit bekannten wäßrigen Primern auf Basis von oxydativ trocknenden Epoxidharzestern und bekannten konventionellen (Lösungsmittel-haltigen) Primern auf Alkydharzbasis ergibt sich eine erheblich günstigere Korrosionsschutzwirkung.

## Patentansprüche

1. Wäßrige Bindemittel für lufttrocknende und für physikalisch trocknende Beschichtungsmittel, **dadurch gekennzeichnet, daß** sie organische Wismutverbindungen **D** und Umsetzungsprodukte **A'ABC** aus Epoxidharzen, Fettsäuren und Aminen enthalten, die durch Reaktion aus Epoxidverbindungen **A'** mit mindestens zwei Epoxidgruppen pro Molekül und Reaktionsprodukten **ABC** von Epoxidverbindungen **A,** Fettsäuren **B** und Aminen **C** erhältlich sind, wobei die zahlenmittlere molare Masse Mₙ der Umsetzungsprodukte **A'ABC** mindestens 5000 g/mol beträgt.

2. Wäßrige Bindemittel nach Anspruch 1, **dadurch gekennzeichnet, daß** die Epoxidverbindungen **A'** und die Epoxidverbindungen **A** unabhängig voneinander Di- oder Polyepoxidverbindungen mit einem spezifischen Epoxidgruppengehalt von 0,4 bis 7 mol/kg sind.

3. Wäßrige Bindemittel nach Anspruch 1 **dadurch gekennzeichnet, daß** die Epoxidverbindungen **A** einen spezifischen Epoxidgruppengehalt von 0,5 bis 4 mol/kg aufweisen.

4. Wäßrige Bindemittel nach Anspruch 1, **dadurch gekennzeichnet, daß** die Epoxidverbindungen **A'** einen spezifischen Epoxidgruppengehalt von 2 bis 5,9 mol/kg aufweisen.

5. Wäßrige Bindemittel nach Anspruch 1, **dadurch gekennzeichnet, daß** die Epoxidverbindungen **A'** und die Epoxidverbindungen **A** unabhängig voneinander ausgewählt sind aus Epoxidverbindungen auf Basis von Bisphenol A, Epoxidverbindungen auf Basis von Bisphenol F sowie aus Mischungen von diesen.

6. Wäßrige Bindemittel nach Anspruch 1, **dadurch gekennzeichnet, daß** Fettsäuren **B** in der Reaktion eingesetzt sind, die mindestens eine olefinische Doppelbindung aufweisen und 6 bis 30 Kohlenstoffatome haben.

7. Wäßrige Bindemittel nach Anspruch 1, **dadurch gekennzeichnet, daß** die Amine **C** aliphatische lineare, cyclische oder verzweigte Amine mit mindestens einer primären oder sekundären Aminogruppe sind.

8. Wäßrige Bindemittel nach Anspruch 1, **dadurch gekennzeichnet, daß** die Epoxidverbindungen **A'** und/oder die Epoxidverbindungen **A** vor der weiteren Umsetzung teilweise oder vollständig durch Reaktion mit Verbindungen **E** mit mindestens einer gegenüber Epoxidgruppen reaktiven Säure- oder Hydroxylgruppe modifiziert sind.

9. Wäßrige Bindemittel nach Anspruch 8, **dadurch gekennzeichnet, daß** die Verbindungen **E** ausgewählt sind aus aromatischen Hydroxyverbindungen, gesättigten aliphatischen linearen oder verzweigten Carbonsäuren mit 2 bis 40 Kohlenstoffatomen, Sulfonsäuren, Phosphorsäure und Alkyl- und Arylphosphonsäuren.

10. Wäßrige Bindemittel nach Anspruch 1, **dadurch gekennzeichnet, daß** die Amine **C** vor der weiteren Reaktion teilweise oder vollständig durch Umsetzung mit aliphatischen oder aromatischen Monoepoxidverbindungen **A"** oder deren Gemischen modifiziert sind.

11. Wäßrige Bindemittel nach Anspruch 10, **dadurch gekennzeichnet, daß** die Monoepoxidverbindungen **A**" ausgewählt sind aus Glycidyläthern von einwertigen Alkoholen oder Phenolen und Glycidylestern von einwertigen Säuren.

12. Wäßrige Bindemittel nach Anspruch 10, **dadurch gekennzeichnet, daß** die Monoepoxidverbindungen **A"** ausgewählt sind aus Butylglycidyläther, 2-Äthylhexylglycidyläther, dem Glycidylester einer Mischung von in α-Stellung verzweigten Pentansäuren, dem Glycidylester einer Mischung von in α-Stellung verzweigten Decansäuren und Glycidyl-2-äthylhexanoat.

13. Verfahren zur Herstellung der Umsetzungsprodukte nach Anspruch 1, **dadurch gekennzeichnet, daß** in der ersten Stufe ein Addukt **ABC** durch Umsetzung der Epoxidverbindungen **A**, der Fettsäuren **B** und der Amine **C** hergestellt wird, das in einer zweiten Stufe mit Epoxidverbindungen **A'** zu den Umsetzungsprodukten **A'ABC** reagiert wird.

14. Verfahren zur Herstellung der Umsetzungsprodukte nach Anspruch 1, **dadurch gekennzeichnet, daß** in einer ersten Stufe die Epoxidverbindungen **A** und die Fettsäuren **B** zu einem Addukt **AB** reagiert werden, das in einer zweiten Stufe mit Aminen **C** zu einem Zwischenprodukt **ABC** umgesetzt wird, welches wiederum in einer dritten Stufe durch Reaktion mit den Epoxidverbindungen **A'** das Umsetzungsprodukt **A'ABC** bildet.

15. Verfahren zur Herstellung der Umsetzungsprodukte nach Anspruch 1, **dadurch gekennzeichnet, daß** in einer ersten Stufe die Epoxidverbindungen **A** mit Aminen **C** zu einem Addukt **AC** reagiert werden, das in einer zweiten Stufe mit den Fettsäuren **B** zu einem Zwischenprodukt **ABC** umgesetzt wird, das wiederum in einer dritten Stufe durch Reaktion mit den Epoxidverbindungen **A'** das Umsetzungsprodukt **A'ABC** bildet.

16. Verfahren nach einem der Ansprüche 13 bis 15, **dadurch gekennzeichnet, daß** die Epoxidverbindungen **A'** teilweise oder vollständig ersetzt sind durch Umsetzungsprodukte von Epoxidverbindungen **A'** mit Verbindungen **E**.

17. Verfahren nach einem der Ansprüche 13 bis 15, **dadurch gekennzeichnet, daß** die Epoxidverbindungen **A** teilweise oder vollständig ersetzt sind durch Umsetzungsprodukte von Epoxidverbindungen **A** mit Verbindungen **E**.

18. Verfahren nach einem der Ansprüche 13 bis 15, **dadurch gekennzeichnet, daß** die Amine **C** teilweise oder vollständig ersetzt sind durch Umsetzungsprodukte von Aminen **C** mit Monoepoxidverbindungen **A"**.

19. Verwendung der wäßrigen Bindemittel nach Anspruch 1 zur Herstellung von lufttrocknenden oder physikalisch trocknenden Grundierungsmitteln zum Schutz vor Korrosion, umfassend die Zumischung von Wismutverbindungen **D** zu dem Umsetzungsprodukten **A'ABC,** gegebenenfalls den Zusatz von Additiven ausgewählt aus Entschäumern, Verlaufshilfsmitteln, Verdickern, Pigmenten, Dispergiermitteln und Antiabsetzmitteln, und Auftragen der erhaltenen Mischung auf Metalloberflächen.

20. Lufttrocknende Korrosionsschutz-Grundierungsmittel enthaltend wäßrige Bindemittel nach Anspruch 1.

21. Physikalisch trocknende Korrosionsschutz-Grundierungsmittel enthaltend wäßrige Bindemittel nach Anspruch 1.

22. Bleche aus unedlen Metallen, beschichtet mit Korrosionsschutz-Grundiermitteln nach einem der Ansprüche 20 und 21.

## Claims

1. An aqueous binder which comprises organic bismuth compounds and reaction products **A'ABC** of epoxy resins, fatty acids and amines, which are obtainable by reacting epoxide compounds **A'** containing at least two epoxide groups per molecule and reaction products **ABC** of epoxide compounds **A**, fatty acids **B** and amines **C**, the number-average molar mass Mₙ of the reaction product. **A'ABC** being at least 5000 g/mol.

2. The aqueous binder as claimed in claim 1, wherein the epoxide compounds **A'** and the epoxide compounds **A** independently of one another are diepoxide or polyepoxide compounds having a specific epoxide group content of from 0.4 to 7 mol/kg.

3. The aqueous binder as claimed in claim 1, wherein the epoxide compounds **A** have a specific epoxide group content of from 0.5 to 4 mol/kg.

4. The aqueous binder as claimed in claim 1, wherein the epoxide compounds **A**' have a specific epoxide group content of from 2 to 5.9 mol/kg.

5. The aqueous binder as claimed in claim 1, wherein the epoxide compounds **A**' and the epoxide compounds **A** independently of one another are selected from epoxide compounds based on bisphenol A, epoxide compounds based on bisphenol F, and mixtures thereof.

6. The aqueous binder as claimed in claim 1, wherein fatty acids **B** are used in the reaction which have at least one olefinic double bond and have from 6 to 30 carbon atoms.

7. The aqueous binder as claimed in claim 1, wherein the amines **C** are aliphatic linear, cyclic or branched amines containing at least one primary or secondary amino group.

8. The aqueous binder as claimed in claim 1, wherein the epoxide compounds **A**' and/or the epoxide compounds **A**, prior to further reaction, are modified in whole or in part by reaction with compounds **E** containing at least one acid group or hydroxyl group which is reactive toward epoxide groups.

9. The aqueous binder as claimed in claim 8, wherein the compounds **E** are selected from aromatic hydroxy compounds, saturated aliphatic linear or branched carboxylic acids having from 2 to 40 carbon atoms, sulfonic acids, phosphoric acid, and alkyl- and arylphosphonic acids.

10. The aqueous binder as claimed in claim 1, wherein the amines **C**, prior to further reaction, are modified in whole or in part by reaction with aliphatic or aromatic monoepoxide compounds **A**" or mixtures thereof.

11. The aqueous binder as claimed in claim 10, wherein the monoepoxide compounds **A**" are selected from glycidyl ethers of monohydric alcohols or phenols and glycidyl esters of monobasic acids.

12. The aqueous binder as claimed in claim 10, wherein the monoepoxide compounds **A**" are selected from butyl glycidyl ether, 2-ethylhexyl glycidyl ether, the glycidyl ester of a mixture of α-branched pentanoic acids, the glycidyl ester of a mixture of α-branched decanoic acids, and glycidyl 2-ethylhexanoate.

13. A process for preparing the reaction products of claim 1, which comprises in the first stage preparing an adduct **ABC** by reacting the epoxide compounds **A**, the fatty acids **B** and the amines **C** and in a second stage reacting said adduct with epoxide compounds **A'** to give the reaction products **A'ABC.**

14. A process for preparing the reaction products of claim 1, which comprises in a first stage reacting the epoxide compounds **A** and the fatty acids **B** to give an adduct **AB** which in a second stage is reacted with amines **C** to give an intermediate **ABC,** which in turn in a third stage reacts with the epoxide compounds **A**' to form the reaction product **A'ABC.**

15. A process for preparing the reaction products of claim 1, which comprises in a first stage reacting the epoxide compounds **A** with amines **C** to give an adduct **AC** which in a second stage is reacted with fatty acids **B** to give an intermediate **ABC,** which in turn in a third stage reacts with the epoxide compounds **A'** to form the reaction product **A'ABC**.

16. The process as claimed in any of claims 13 to 15, wherein the epoxide compounds **A'** are replaced in whole or in part by reaction products of epoxide compounds **A'** with compounds **E**.

17. The process as claimed in any of claims 13 to 15, wherein the epoxide compounds **A** are replaced in whole or in part by reaction products of epoxide compounds **A** with compounds **E**.

18. The process as claimed in any of claims 13 to 15, wherein the amines **C** are replaced in whole or in part by reaction products of amines **C** with monoepoxide compounds **A**".

19. The use of the aqueous binder as claimed in claim 1 to prepare primers for protecting against corrosion, comprising adding bismuth compounds **D** to the reaction products **A'ABC**, adding, if desired, additives selected from defoamers, leveling assistants, thickeners, pigments, dispersants, and antisettling agents, and applying the resulting mixture to metal surfaces.

20. An air-drying anticorrosion primer composition comprising an aqueous binder as claimed in claim 1.

21. A physically drying anticorrosion primer comprising an aqueous binder as claimed in claim 1.

22. A sheet of a base metal, coated with an anticorrosion primer composition as claimed in claim 20 or 21.

## Revendications

1. Liants aqueux pour compositions de revêtement séchant à l'air ou à séchage physique, **caractérisés en ce qu'**ils contiennent des composés organiques du bismuth D et des produits de réaction A'ABC de résines époxydiques, d'acides gras et d'amines, que l'on peut obtenir par réaction de composés époxydiques A' ayant au moins deux groupes époxy par molécule et de produits de réaction ABC de composés époxydiques A, d'acides gras B et d'amines C, la masse moléculaire moyenne en nombre Mₙ des produits de réaction A'ABC étant d'au moins 5000 g/mole.

2. Liants aqueux selon la revendication 1, **caractérisés en ce que** les composés époxydiques A' et les composés époxydiques A sont, indépendamment les uns des autres, des composés di- ou polyépoxydiques ayant une teneur massique en groupes époxy de 0,4 à 7 moles/kg.

3. Liants aqueux selon la revendication 1, **caractérisés en ce que** les composés époxydiques A ont une teneur massique en groupes époxy de 0,5 à 4 moles/kg.

4. Liants aqueux selon la revendication 1, **caractérisés en ce que** les composés époxydiques A' ont une teneur massique en groupes époxy de 2 à 5,9 moles/kg.

5. Liants aqueux selon la revendication 1, **caractérisés en ce que** les composés époxydiques A' et les composés époxydiques A sont choisis indépendamment les uns des autres parmi les composés époxydiques à base de bisphénol A, les composés époxydiques à base de bisphénol F, et les mélanges de ceux-ci.

6. Liants aqueux selon la revendication 1, **caractérisés en ce que** l'on utilise des acides gras B dans la réaction, qui présentent au moins une double liaison oléfinique et ont de 6 à 30 atomes de carbone.

7. Liants aqueux selon la revendication 1, **caractérisés en ce que** les amines C sont des amines aliphatiques à chaîne droite ou ramifiée, ou cycliques, ayant au moins un groupe amino primaire ou secondaire.

8. Liants aqueux selon la revendication 1, **caractérisés en ce que** les composés époxydiques A' et/ou les composés époxydiques A sont, avant une réaction plus poussée, modifiés en totalité ou en partie par réaction avec des composés E ayant au moins un groupe acide ou hydroxyle réactif vis-à-vis des groupes époxy.

9. Liants aqueux selon la revendication 8, **caractérisés en ce que** les composés E sont choisis parmi les composés hydroxylés aromatiques, les acides carboxyliques aliphatiques saturés à chaîne droite ou ramifiée ayant de 2 à 40 atomes de carbone, les acides sulfoniques, l'acide phosphorique et les acides alkyl- et arylphosphoniques.

10. Liants aqueux selon la revendication 1, **caractérisés en ce que** les amines C sont, avant la suite de la réaction, modifiées en totalité ou en partie par réaction avec des composés monoépoxydiques aliphatiques ou aromatiques A" ou leurs mélanges.

11. Liants aqueux selon la revendication 10, **caractérisés en ce que** les composés monoépoxydiques A" sont choisis parmi les éthers glycidyliques de monoalcools ou de phénols et les esters glycidyliques d'acides monovalents.

12. Liants aqueux selon la revendication 10, **caractérisés en ce que** les composés monoépoxydiques A" sont choisis parmi le butylglycidyléther, le 2-éthylhexylglycidyléther, l'ester glycidylique d'un mélange d'acides pentanoïques ramifiés en position α, l'ester glycidylique d'un mélange d'acides décanoïques ramifiés en position α, et le 2-éthylhexanoate de glycidyle.

13. Procédé de préparation des produits de réaction selon la revendication 1, **caractérisé en ce que**, dans la première étape, on prépare un adduit ABC par réaction des composés époxydiques A, des acides gras B et des acides C, qui dans une deuxième étape est mis à réagir avec des composés époxydiques A' pour donner les produits de réaction A'ABC.

14. Procédé de préparation des produits de réaction selon la revendication 1, **caractérisé en ce que**, dans une première étape, on fait réagir les composés époxydiques A et les acides gras B pour obtenir un adduit AB, qui dans une deuxième étape est mis à réagir avec des amines C pour donner un produit intermédiaire ABC, lequel pour sa part, dans une troisième étape, et par réaction avec les composés époxydiques A', forme le produit de réaction A'ABC.

15. Procédé de préparation des produits de réaction selon la revendication 1, **caractérisé en ce que**, dans une première étape, on fait réagir les composés époxydiques A avec des amines C pour obtenir un adduit AC, qui dans une deuxième étape est mis à réagir avec les acides gras B pour donner un produit intermédiaire ABC, lequel pour sa part, dans une troisième étape et par réaction avec les composés époxydiques A', forme le produit de réaction A'ABC.

16. Procédé selon l'une des revendications 13 à 15, **caractérisé en ce que** les composés époxydiques A' sont en totalité ou en partie remplacés par des produits de la réaction de composés époxydiques A' avec des composés E.

17. Procédé selon l'une des revendications 13 à 15, **caractérisé en ce que** les composés époxydiques A sont en totalité ou en partie remplacés par des produits de la réaction de composés époxydiques A avec des composés E.

18. Procédé selon l'une des revendications 13 à 15, **caractérisé en ce que** les amines C sont en totalité ou en partie remplacées par des produits de la réaction d'amines C avec des composés monoépoxydiques A".

19. Utilisation des liants aqueux selon là revendication 1 pour préparer des peintures pour couche de fond, séchant à l'air ou à séchage physique, pour protéger de la corrosion, comprenant l'addition, par mélange, de composés du bismuth D au produit de réaction A'ABC, éventuellement l'addition d'additifs choisis parmi les antimoussants, les auxiliaires d'étalement, les épaississants, les pigments, les dispersants et les agents anti-sédimentation, et l'application, sur des surfaces métalliques, du mélange obtenu.

20. Peinture pour couche de fond anticorrosion séchant à l'air contenant des liants aqueux selon la revendication 1.

21. Peinture pour couche de fond anticorrosion à séchage physique contenant des liants aqueux selon la revendication 1.

22. Tôles en métaux non précieux, revêtues de peintures pour couche de fond anticorrosion selon l'une des revendications 20 et 21.
